# EUROPEAN PATENT APPLICATION

(11) **EP 4 411 132 A1**
(43) Date of publication of application: **07.08.2024**
(21) Application number: 22871248.5
(22) Date of filing: 04.01.2022
(51) Int. Cl.: F03B 3/14

(54) **VARIABLE-PITCH SEAWAVE POWER GENERATION DEVICE AND VARIABLE-PITCH SEAWAVE POWER GENERATION METHOD**

(30) Priority: 27.09.2021 CN 202111138595
(71) Applicant: Guangdong Goldwind Science & Technology Co., Ltd., Yangjiang, Guangdong 529500 (CN)
(72) Inventor: TAN, Hong, Yancheng, Jiangsu 224100 (CN); LI, Rongfu, Yancheng, Jiangsu 224100 (CN); JI, Weidong, Yancheng, Jiangsu 224100 (CN)
(74) Representative: Gulde & Partner
(86) International application number: PCT/CN2022/070056
(87) International publication number: WO 2023/045180

(57) **Abstract**

A variable-pitch seawave power generation device and method. The seawave power generation device comprises an impeller (1) and a variable-pitch control system. The impeller (1) rotates about a vertical axis. The impeller (1) comprises a plurality of blade units distributed divergently from the center of the impeller (1), and the blade units extend radially. The variable-pitch control system can control blades (13) in the blade units to rotate along a horizontal axis to adjust a variable-pitch angle. The power generation device performs energy transfer with few steps, such that the energy loss can be reduced, and the energy utilization rate can be improved. The blades (13) of the impeller (1) can adjust their own pitch angle according to different seawave features to obtain the optimal power generation efficiency under a corresponding seawave condition.

## Description

This application claims the benefit of Chinese Patent Application No.202111138595.3, entitled "VARIABLE-PITCH SEAWAVE POWER GENERATION DEVICE AND VARIABLE-PITCH SEAWAVE POWER GENERATION METHOD ", filed on September 27, 2021 with the China National Intellectual Property Administration (CNIPA), which is incorporated herein by reference in its entirety.

### FIELD

The present disclosure relates to the technical field of power generation, and in particular to a variable-pitch wave power generation device and a variable-pitch wave power generation method.

### BACKGROUND

Wave energy is of large capacity and not easily affected by the weather, and the collection and transformation of wave energy have received public attention. However, traditional wave power generation system has following shortcomings.

For traditional wave power generation devices, kinetic energy in wave flow direction is converted into kinetic energy of a hydraulic cylinder piston, then air is compressed to drive a turbine motion of the generator to generate electric energy. Multiple kinetic energy transfers and conversions occur in the system, resulting in large energy loss and low power generation efficiency.

In addition, size and shape of the wave force structure in the traditional wave power generation device are fixed, only being applied to wave characteristics of a small range. Wave characteristics include wavelength, wave height, wave period and so on. The wave is complex and changeable, of which characteristic parameters are constantly changing. Once the wave parameters go beyond the application scope of the traditional wave power generation system, the power generation efficiency will be greatly reduced, resulting in poor overall power generation performance, low overall power, and unstable power of power generation.

### SUMMARY

A variable-pitch wave power generation device is provided in the present disclosure. The device includes an impeller and a pitch control system. The impeller rotates around a vertical axis, and the impeller includes multiple blade elements distributed diffusively outwards from a center of the impeller. The pitch control system can control the blade element to rotate around a horizontal axis for pitch adjustment.

A variable-pitch wave power generation method is also provided in the present disclosure, based on any one of the variable-pitch wave power generation devices above. In response to a power of power generation not exceeding a rated power, all the blades are controlled to be pitch-opened to the maximum position. In response to the power of power generation being on verge of exceeding the rated power, the pitch angles of some or all of the blades are controlled, so that the power of power generation is reduced until approaching the rated power.

The variable-pitch wave power generation device in this embodiment has following advantages.
1. Energy of a fluctuation of the wave up and down is directly used to drive the impeller and a turbine generator to rotate for power generation, involving fewer energy transfer steps, so that energy loss is reduced and energy utilization rate is improved.
2. Due to the variable-pitch function of the blade on the impeller, the pitch angle of the blade can be adjusted according to different wave characteristics, to acquire the optimal power generation efficiency under corresponding wave conditions. Therefore, the variable-pitch wave power generation device has stronger applicability and can be applied to a wider range of waves.
3. The variable-pitch wave power generation device, provided with a pitch control system, also has constant-power characteristics, ensuring stable output power of power generation device, and stronger friendliness to electric power network.

As a further embodiment, each blade element includes two or more blades arranged radially. The number, size and shape of the blades in each blade element can be customized according to a project site. For example, according to wave characteristics of the applied sea area such as the usual wavelength range, and in conjunction with airfoil characteristics of the blade, a reasonable blade length can be designed to minimize the influence of the opposite upward and downward fluctuations on the energy collection of the blade. The number of arranged blades in each blade element can be calculated and designed according to the power generation requirements. Thus, the optimal power and efficiency of the whole device are achieved, the contradiction between efficiency of power generation and power of power generation is solved, and the scheme has stronger expansibility and applicability.

### BRIEF DESCRIPTION OF THE DRAWINGS

Figure 1 is a schematic structural diagram of a variable-pitch wave power generation device according to a first embodiment of the present disclosure;
Figure 2 is a schematic structural diagram of a single blade in Figure 1;
Figure 3 is a schematic diagram of blade force characteristic analysis based on a blade cross section in Figure 2;
Figure 4 is a schematic structural diagram of a variable-pitch wave power generation device according to a second embodiment of the present disclosure;
Figure 5 is a schematic state diagram of a blade after being pitch-closed in Figure 4; and
Figure 6 is a schematic structural diagram of a variable-pitch wave power generation device according to a third embodiment of the present disclosure.

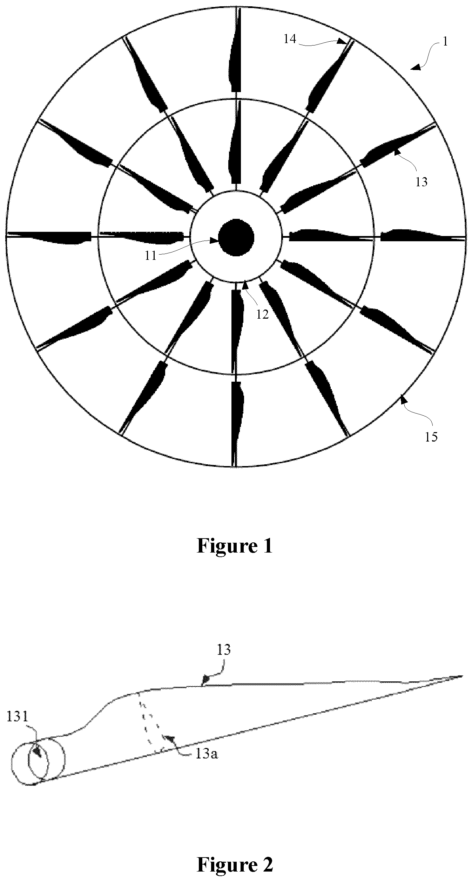

Reference numerals in Figures 1-6:
1- Impeller;
11-Turbine generator; 12-Center foundation; 13-Blade; 131-Variable-pitch execution element; 13a-Cross Section; 14-Support rod; 15-Ring support frame;
2-General foundation;
3-Connecting rod;
4-Ring frame.

### DETAILED DESCRIPTION

In order to enable those skilled in the art to better understand the technical solutions of the present disclosure, the present disclosure will be further described in detail with reference to the drawings and specific embodiments.

Referring to Figure 1, Figure 1 is a schematic structural diagram of a variable-pitch wave power generation device according to a first embodiment of the present disclosure.

The variable-pitch wave power generation device includes an impeller 1 capable of horizontal rotation and a pitch control system. Horizontal rotation refers to rotation in the horizontal plane. Figure 1 shows the impeller 1 in an overlooking angle. Specifically, the impeller 1 includes multiple blade elements distributed diffusively outwards from a center of the impeller 1, and each blade element includes at least one blade 13 arranged radially along the impeller 1. In Figure 1, each blade element includes two blades 13 that extend radially along the impeller 1. The material of blade 13 is not limited, which can be made of steel or composite material.

The pitch control system can control blade 13 to rotate around the horizontal axis to adjust the pitch. After the blade 13 is pitch-opened, the impeller 1 is drove to rotate under a fluctuation action of the wave up and down, so that the kinetic energy of fluctuation of the wave up and down is collected and converted and a turbine generator 11 of the variable-pitch wave power generation device is drove to generate power. The turbine generator 11 is connected to the center of the impeller 1.

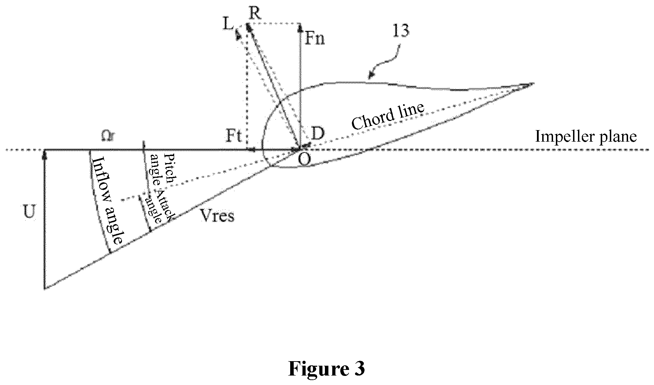

The blade 13 is forced by the fluctuation of the wave up and down to drive impeller 1 to rotate, the principle of which can be referred to Figures 2-3. Figure 2 is a schematic structural diagram of a single blade 13 in Figure 1. Figure 3 is a schematic diagram of blade force characteristic analysis based on a cross section 13a of the blade 12 in Figure 2.

As shown in Figure 3, the impeller plane of the impeller 1 is the horizontal plane in this embodiment, and the blade 13 rotates around a horizontal axis when adjust the pitch. In Figure 3, the horizontal axis is perpendicular to the paper direction and intersects the paper at point O. The angle between the impeller plane and the chord line of the blade 13 is the pitch angle. A water particle velocity U which is produced from the fluctuation of the wave up and down, and a rotational velocity Qr of impeller 1, form a resultant velocity Vres. An angle between the impeller plane and the resultant velocity Vres is the inflow angle, and an angle between a chord line and the resultant velocity Vres is an attack angle. The resultant velocity Vres acting on blade 13 can produce a lift force L and a resistance force D. The lift force L and the resistance force D can produce a resultant force R on the blade 13. The resultant force R can be decomposed into a normal force Fn perpendicular to the impeller plane and a tangential force Ft along the impeller plane, where the tangential force Ft can produce torque to drive impeller 1 to rotate. The resultant torque of multiple blades 13 can drive the impeller 1 to rotate, thereby driving the turbine generator 11 to generate power. The principle that the blade 13 driving the impeller 1 to rotate under the action of external forces can be referred to the rotation principle of the impeller 1 in the conventional wind turbine, and will not be described in more details.

The variable-pitch wave power generation device in this embodiment has following advantages.
1. Energy of the fluctuation of the wave up and down is directly used to drive the impeller 1 and the turbine generator 11 to rotate for power generation, involving fewer energy transfer steps, so that energy loss is reduced and energy utilization rate is improved.
2. Due to the variable-pitch function of the blade 13 on the impeller 1, the pitch angle of the blade 13 can be adjusted according to different wave characteristics to acquire the optimal power generation efficiency under corresponding wave conditions. Therefore, the variable-pitch wave power generation device has stronger applicability and can be applied to a wider range of waves.
3. It is particularly important that each blade element in this embodiment includes two or more blades 13 arranged radially, that is, each blade element is composed of multiple small blades. Impeller 1 in this embodiment is mainly configured to collect the energy of the fluctuation of the wave up and down. If a size of blade 13 along the direction of impeller 1 is too long, for example, the size is about the same as one wavelength of the wave fluctuation, different directions of the up and down waves may lead to partial cancellation, which affects the collection efficiency. In this embodiment, the blade element is divided into multiple blades 13, and the number, size and shape of the blades 13 in each blade element can be customized according to the project site. For example, according to wave characteristics of the applied sea area such as the usual wavelength range, and in conjunction with airfoil characteristics of the blade 13, a reasonable length of blade 13 can be designed to minimize the influence of the opposite upward and downward fluctuations on the energy collection of the blade 13. The number of arranged blades in each blade element can be calculated and designed according to the power generation acquirement. Thus, an optimal power and efficiency of the whole device are achieved, and a contradiction between efficiency of power generation and the power of power generation is solved.

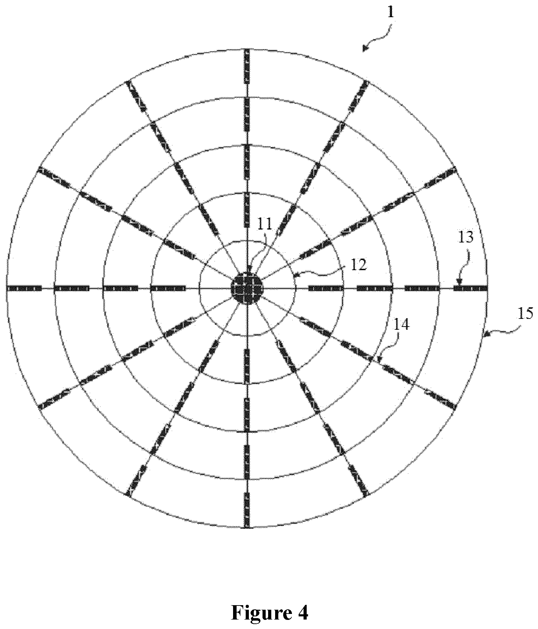

Each blade element of impeller 1 shown in Figure 1 includes two blades 13, and apparently the number is not limited thereto. As shown in Figure 4, which is a schematic structural diagram of a variable-pitch wave power generation device according to a second embodiment of the present disclosure, each blade element includes four blades 13.

It can be understood that, through test or dynamic simulation, the reasonable design of the airfoil of the blade 13 can be implemented, so that both the upward and downward fluctuations can generate a torque on the blade 13 to enable the impeller 1 to rotate in a same direction. The utilization rate of the wave energy can be improved by an airfoil design focusing on one direction energy collection.

It can be seen that the blade element in this embodiment is composed of multiple blades 13, so that the embodiment has stronger expansibility and applicability.

4. The variable-pitch wave power generation device has constant-power characteristics, ensuring stable power output of the device and strong friendliness to electric power network.

The stable output power of power generation can be implemented through the pitch control system as follows.

The rated power can be set according to different requirements. When a power of power generation does not exceed the rated power, all the blades 13 are controlled to be pitch-opened to the maximum. At this time, the waves are generally gentle.

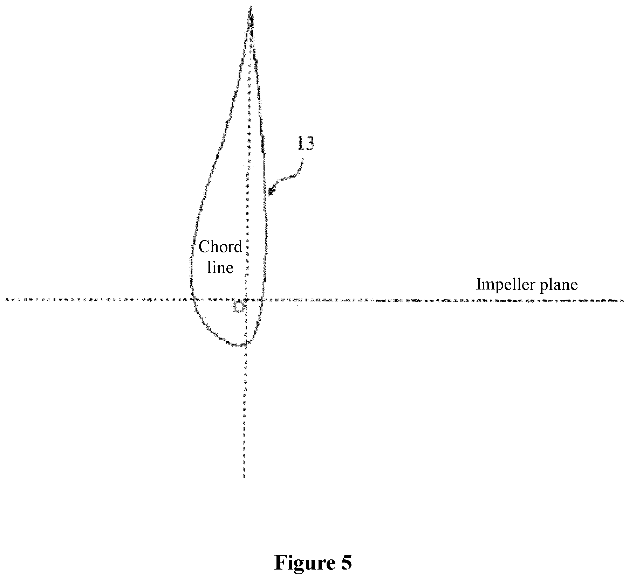

When the wave becomes rough, the power of power generation reaches the rated power and has a tendency to exceed the rated power. The pitch angles of part or all of the blades 13 can be adjusted by the pitch control system, and the torques of part or all of the blades 13 can be reduced, to reduce the power of power generation until it approaches the rated power. Therefore, the variable-pitch wave power generation device has constant-power characteristics. Adjusting the pitch angle of part of the blades includes direct adjustment to control partial blades 13 to be pitch-closed. As shown in Figure 5, Figure 5 is a schematic state diagram of a blade after being pitch-closed in Figure 4.

The pitch control system in this embodiment includes multiple variable-pitch execution elements 131, and each blade 13 is provided with a corresponding variable-pitch execution element 131, that is, each blade 13 in each blade element is independently controlled. In this way, all blades 13 can be independently pitch controlled and adjusted according to constant-power requirements.

In this embodiment, if a wave is too rough, the blade 13 of the variable-pitch wave power device may be damaged due to excessive force if the blade 13 is pitch-opened. Therefore, in response to detecting rough wave, the pitch control system can directly control all blades 13 to be pitch-closed to protect the safety of the device.

Reference is made to Figure 1 continually, impeller 1 includes a center foundation 12, and the blade element further includes a support rod 14 that extends radially. One end of the support rod 14 is fixed to the center foundation 12, and each blade 13 of the blade element is arranged along the length direction of the support rod 14. In this way, the support rod 14 can provide stable and reliable support for each blade 13 in the corresponding blade element, and the structural design is simple. It can be seen that each blade 13 of the blade element is not limited to being connected to the center foundation 12 through the support rod 14. For example, each blade 13 can be connected to the center foundation 12 through a separate connection structure.

In Figure 1, the impeller 1 further includes multiple ring support frames 15, and each ring support frame 15 is separately arranged around the center foundation 12. The multiple ring support frames 15 are sequentially distributed from inside to outside, that is, sequentially arranged in the direction away from the center foundation with the ring size gradually increasing. Each support rod 14 is connected to multiple ring support frames 15, that is, multiple support rods 14 are connected to multiple ring support frames 15 at the same time, to form a grid-like rigid support frame structure. In this way, the blade elements are assembled together more reliably and stability of the structure is improved. The multiple ring support frames 15 in Figure 1 are circular rings concentrically arranged with the impeller 1. But obviously, the ring support frames 15 here are not limited to the circular rings shown in Figure 1, but can also be in other shapes such as square, as long as multiple support rods 14 can be connected in series to enhance the fixed reliability.

The center foundation 12 can be a floating foundation or a fixed foundation. The floating foundation can better adapt to the waves, while the fixed foundation has a relative stable position. The type of the center foundation 12 can be selected according to the specific application environment and application requirements.

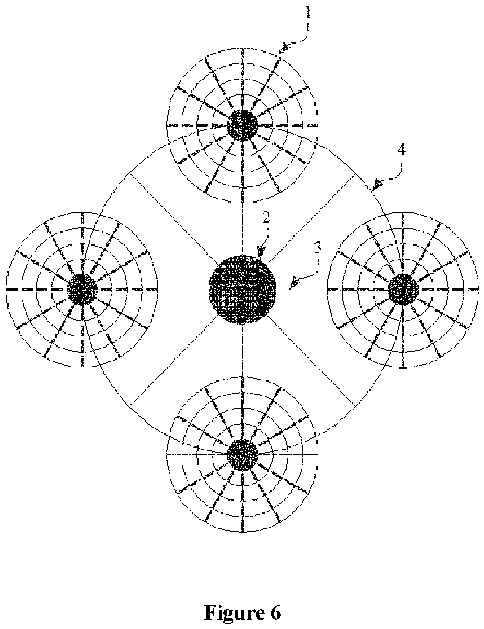

Referring to Figure 6, Figure 6 is a schematic structural diagram of a variable-pitch wave power generation device according to a third embodiment of the present disclosure.

In this embodiment, the variable-pitch wave power generation device is not limited to be provided with only one impeller 1. In Figure 6, the variable-pitch wave power generation device includes a general foundation 2 and at least two impellers 1 as described in the above embodiments. All impellers 1 are arranged around the general foundation 2, and all impellers 1 are connected to the general foundation 2 through a rigid connecting frame, which is convenient for multiple impellers 1 to be collectively arranged in a certain sea area. In this way, energy of the fluctuation of the wave up and down is better collected in the sea area with relatively consistent wave characteristic parameters. It is also convenient for the centralized collection of electric energy generated by multiple impellers 1. Figure 6 shows four impellers 1 around the general foundation 2, but apparently, the number of impellers 1 in this embodiment is not limited.

Specifically, the connecting frame may include a ring frame 4 and at least two connecting rods 3. The center foundations 12 of multiple impellers 1 are respectively connected to the ring frame 4, that is, multiple impellers 1 are connected in series on the ring frame 4. The ring frame 4 may be a circular ring as shown in Figure 6, or in other shapes. The two ends of the connecting rod 3 in the connecting frame are respectively connected to the ring frame 4 and the general foundation 2, so that a skeleton structure is formed through the connecting rod 3, the connection between the ring frame 4 and the general foundation 2 is formed, and strength of the whole connecting frame is improved.

In addition, the same as the center foundation 12 of the single impeller 1 above, the general foundation 2 can be a floating foundation or a fixed foundation, which can be selected according to the specific application environment and application requirements.

Specific examples are use in this specification to illustrate the principle and implementation of the present disclosure. The description of the above embodiments is only to facilitate understanding of the method and core concept of the present disclosure. It should be noted that, for those skilled in the art, many improvements and modifications may be further made to the present disclosure without departing from the principle of the present disclosure, and these improvements and modifications fall within the protection scope of claims of the present disclosure.

## Claims

1. A variable-pitch wave power generation device, comprising an impeller (1) and a pitch control system, wherein the impeller (1) rotates around a vertical axis, the impeller (1) comprises a plurality of blade elements distributed diffusively outwards from a center of the impeller (1), the blade elements extend radially, and the pitch control system is capable of controlling the blade elements to rotate around a horizontal axis for pitch adjustment.

2. The variable-pitch wave power generation device according to claim 1, wherein each of the blade elements comprises at least one blade (13) arranged radially along the impeller (1).

3. The variable-pitch wave power generation device according to claim 2, wherein the impeller (1) comprises a center foundation (12), the blade element comprises a support rod (14) that extends radially, an end of the support rod (14) is fixed to the center foundation (12), and each blade (13) of the blade element is arranged along a length direction of the support rod (14).

4. The variable-pitch wave power generation device according to claim 3, further comprising a plurality of ring support frames (15), wherein each of the ring support frames (15) is separately arranged around the center foundation (12), and the ring support frames (15) are sequentially distributed from inside to outside; and each support rod (14) is connected to a plurality of the ring support frames (15).

5. The variable-pitch wave power generation device according to claim 3, further comprising a general foundation (2) and at least two impellers (1), wherein all the impellers (1) are arranged around the general foundation (2), and the impellers (1) are connected to the general foundation (2) through a connecting frame.

6. The variable-pitch wave power generation device according to claim 5, wherein the connecting frame comprises a ring frame (4) and at least two connecting rods (3), the center foundations (12) of the impellers (1) are all connected to the ring frame (4), and two ends of each connecting rod (3) are respectively connected to the ring frame (4) and the general foundation (2).

7. The variable-pitch wave power generation device according to claim 5, wherein each of the general foundation (2) and the center foundation (12) is a floating foundation or a fixed foundation.

8. The variable-pitch wave power generation device according any one of claims 1 to 7, wherein the pitch control system comprises a plurality of variable-pitch execution elements (131), and each blade (13) is provided with a corresponding one of the variable-pitch execution elements (131).

9. A variable-pitch wave power generation method, based on the variable-pitch wave power generation device according any one of claims 1 to 8, comprising:
in response to a power of power generation not exceeding a rated power, controlling all the blades (13) to be pitch-opened to a maximum position; and
in response to the power of power generation being on verge of exceeding the rated power, controlling pitch angles of some or all of the blades to reduce the power of power generation until approaching the rated power.
